# EUROPÄISCHE PATENTSCHRIFT

(11) **EP 1 826 096 B1**
(45) Veröffentlichungstag und Bekanntmachung des Hinweises auf die Patenterteilung: **22.09.2010**
(21) Anmeldenummer: 07003485.5
(22) Anmeldetag: 20.02.2007
(51) Int. Cl.: B62D 5/04, B62D 5/083, B62D 6/00

(54) **Verfahren zur Steuerung einer kraftunterstützenden Lenkung und Servolenkung für ein Kraftfahrzeug**
Method for controlling power assisted steering and servo steering for a motor vehicle
Procédé destiné à la commande d'une direction améliorant la puissance et direction assistée pour un véhicule automobile

(30) Priorität: 22.02.2006 DE 102006008572
(43) Veröffentlichungstag der Anmeldung: 29.08.2007
(73) Patentinhaber: ThyssenKrupp Presta SteerTec GmbH, 40476 Düsseldorf (DE)
(72) Erfinder: Rachel, Rüdiger, 73650 Winterbach (DE); Stoehr, Patricia, 70329 Stuttgart (DE); Linzmaier, Kurt, 73650 Winterbach (DE)
(74) Vertreter: Lenzing Gerber Stute

(56) Entgegenhaltungen:
- EP-A- 1 652 749
- DE-A1-102004 035 094
- DE-B3- 10 254 688
- US-A- 5 485 892

## Beschreibung

Die vorliegende Erfindung betrifft ein Verfahren mit den Merkmalen des Oberbegriffs des Anspruchs 1. Die Erfindung betrifft zudem eine Servolenkung für ein Kraftfahrzeug nach dem Oberbegriff des Anspruchs 12.

DE 10 2004 035 094 A1, die den Oberbegriff der Ansprüche 1 und 12 bildet, beschreibt eine Servolenkung mit einem hydraulischen Drehschieberventil, wobei das Drehschieberventil hydraulisch betätigbare Rückwirkungselemente umfasst, mittels derer durch hydraulische Kraftbeaufschlagung eine automatische Ansteuerung des Drehschieberventils und somit eines Servomotors der Lenkung ermöglicht ist. Die hydraulische Ansteuerung der Rückwirkungselemente erfolgt über elektrisch ansteuerbare Proportionalventile. Die elektrische Ansteuerung der Proportionalventile wird von einer elektronischen Steuereinheit geregelt, so dass grundsätzlich eine teil- oder vollautomatische Ansteuerung der Servolenkung ermöglicht ist. Zugleich besteht eine mechanische Verbindung zwischen einer von einem Fahrer manuell betätigbaren Lenksäule und einem mit den Fahrzeugrädern verbundenen Lenkgetriebe. Für eine solche selbsttätige Lenkbewegung ist es erforderlich, Sollwerte in einer elektronischen Steuereinheit zu generieren, um die Stelleinheit mit diesen Sollwerten ansteuern zu können. Weiter ist es erforderlich, den Istwert, also einen Messwert eines Drehzustandes der Lenksäule zu erfassen, um den Regelkreis zu schließen.

Eine solche Erkennung einer manuellen Betätigung eines Lenkrades wird üblicherweise über einen in der Lenksäule vorgesehenen Drehmomentsensor vorgenommen. Ist die Lenksäule und insbesondere der Drehmomentsensor im wesentlichen momentenfrei, so wird keine manuelle Betätigung festgestellt. Liegt ein Drehmoment an, so wird auf eine manuelle Betätigung geschlossen.

Die Integration eines Drehmomentmesswertes in die Steuerung erfordert nicht nur einen zusätzlichen Sensor in der Lenkung, sondern auch zusätzlichen Rechenaufwand und ergibt damit zusätzliche mögliche Fehlerquellen.

Es ist deshalb die Aufgabe der Erfindung, ein Verfahren anzugeben, mittels dessen die Erkennung eines manuellen Fahrereingriffs ohne die Auswertung des Signals eines Drehmomentsensors möglich ist. Es ist zudem die Aufgabe der Erfindung, eine entsprechende Servolenkung für ein Kraftfahrzeug anzugeben.

Diese Aufgabe wird durch ein Verfahren mit den Merkmalen des Anspruchs 1 gelöst. Durch die Auswertung des Sollwertes der Stelleinheit und des Messwertes des Drehzustandes der Lenksäule zur Ermittlung der Information über das Vorliegen oder Nichtvorliegen einer manuellen Betätigung der Lenksäule durch den Fahrer wird auf besonders einfache Weise eine alleinige oder unterstützende Information über die Tätigkeit des Fahrers gewonnen. Hierdurch kann z.B. ein Programm zur automatischen Lenkungssteuerung abgebrochen oder ausgesetzt werden. Insbesondere ermöglicht die Erfindung, unter Umständen auf weitere spezielle Sensoren zur Erkennung eines Eingriffs durch den Fahrer zu verzichten. In Kombination mit solchen zusätzlichen Sensoren wird insgesamt die Betriebssicherheit erhöht. Dies gilt auch, weil weiter der Messwert des Drehzustandes ein momentaner Drehwinkel der Lenksäule ist, wobei ferner der Verfahrensschritt umfasst ist, den momentanen Drehwinkel wiederholt oder kontinuierlich zu messen und eine Lenksäulen-Winkelgeschwindigkeit aus einer zeitlichen Änderung des Drehwinkels zu bestimmen. Ein Sensor zur Erfassung einer momentanen Winkelstellung der Lenksäule ist einfach, zuverlässig und regelmäßig in automatisiert ansteuerbaren Lenkungen enthalten. Durch seine insbesondere zeitabhängige Messung lässt sich ein wesentlicher Parameter zur Ermittlung eines Fahrereingriffs ableiten, ohne dass weitere Sensoren, z. B. Drehmomentsensoren, notwendig sind. Weiter umfasst das Verfahren den Schritt des Ermittelns einer Abweichung des Sollwertes der Stelleinheit von der Drehwinkelgeschwindigkeit, insbesondere nach Normierung durch einen vorgebbaren Faktor, wobei die Betätigung der Lenksäule durch den Fahrer dann erkannt wird, wenn die Abweichung einen Schwellwert übersteigt. Im Allgemeinen hängen der Sollwert der Stelleinheit und die Drehwinkelgeschwindigkeit unmittelbar voneinander ab; jedoch verlaufen sie nicht streng proportional zueinander. Typische Abweichungen sind Überschwinger und zeitliche Verzögerungen. Somit ist das Vorsehen des Überschreitens eines Schwellwertes eine einfache und zugleich zuverlässige Lösung, einen Eingriff durch den Fahrer zu erkennen.

In bevorzugter Ausführung ist der Sollwert der Stelleinheit ein elektrisches Signal zur Beaufschlagung eines elektrisch ansteuerbaren hydraulischen Proportionalventils. Insbesondere bevorzugt ist der Sollwert eine Differenz zweier elektrischer Signale zur Beaufschlagung zweier elektrisch ansteuerbarer hydraulischer Proportionalventile, wobei die beiden Proportionalventile zur Ansteuerung entgegengesetzter Lenkungskräfte verschaltet sind. Insgesamt lässt sich hierdurch ein Eingriff durch den Fahrer unter Zuhilfenahme bereits einfacher Sollwerte ermitteln, obwohl die tatsächlich an der Lenkung resultierenden Stellkräfte unter Umständen einen recht komplizierten Zusammenhang mit den Sollwerten aufweisen.

Insbesondere vorteilhaft ist dabei vorgesehen, dass der Schwellwert von einer Geschwindigkeit des Kraftfahrzeugs abhängt. Einflussgrößen, die eine Proportionalität zwischen Sollwerten der Stelleinheit, also Sollwerten der Kraftbeaufschlagung der Lenksäule, und der Winkelgeschwindigkeit der Lenksäule verhindern, sind regelmäßig von der Fahrzeuggeschwindigkeit abhängig. Es kann sich hierbei insbesondere um Trägheiten der Räder, äußere Beeinflussungen wie das Touchieren einer Bordsteinkante oder Fahrbahnunebenheiten oder ähnliches handeln. Im allgemeinen ist die Abweichung von einem idealen Zusammenhang von Sollwert und Messgröße im vorliegenden Fall um so größer, je größer die Fahrzeuggeschwindigkeit ist. Diese Effekte lassen sich durch eine Abhängigkeit des Schwellwertes von der Fahrzeuggeschwindigkeit zumindest teilweise ausgleichen.

Alternativ oder ergänzend hierzu kann der Verfahrensschritt vorgesehen sein, eine Wartezeit in Abhängigkeit eines Überschreitens eines Schwellwertes durch die Abweichung und/oder im Falle einer Überschreitung eines Schwellwertes durch eine Geschwindigkeit des Fahrzeugs zu starten, wobei auf die manuelle Betätigung der Lenksäule nur dann erkannt wird, wenn die Abweichung einen Schwellwert nach Ablauf der Wartezeit übersteigt. Hierdurch wird dem Umstand Rechnung getragen, dass bei Änderungen des Sollwertes oder bei äußeren Beeinflussungen der Lenkungsmechanik momentane Überschwinger auftreten können, so dass nicht jede momentane Überschreitung des Schwellwerts die sichere Erkennung eines Fahrereingriffs erlaubt. Liegt jedoch nach einer Wartezeit weiterhin eine entsprechende Abweichung vor, so liegt mit hoher Wahrscheinlichkeit ein entsprechender Fahrereingriff vor. Besonders bevorzugt hängt dabei die Dauer der Wartezeit von einer Geschwindigkeit des Fahrzeugs ab, wobei insbesondere bei kleinen Geschwindigkeiten keine Wartezeit vorgesehen sein kann. Hierdurch ist je nach Fahrzeuggeschwindigkeit eine jeweils schnellstmögliche Erkennung eines Fahrereingriffs gewährleistet. Typische Wartezeiten liegen bei etwa 0,2 Sekunden bis etwa 0,5 Sekunden.

Weiterhin bevorzugt ist es vorgesehen, eine Integration einer insbesondere normierten Differenz des Sollwertes der Stelleinheit und des Messwertes des Drehzustandes der Lenksäule über die Zeit vorzunehmen, wobei das Integral über einen gegebenen Zeitraum ein Maß für das Vorliegen oder Nichtvorliegen einer manuellen Betätigung der Lenksäule durch den Fahrer ist. Durch die Integration wird auf besonders sichere Weise ein kurzzeitiges Fehlsignal ausgeschlossen. Vielmehr wird im allgemeinen eine Abweichung zu jedem Zeitpunkt um so größer sein, je mehr Drehmoment der Fahrer durch seinen Eingriff auf die Lenksäule ausübt. Die Integration über die Zeit ergibt daher mit zunehmender Zeitdauer des Eingriffs eine zunehmende Sicherheit der Erkennung des Eingriffs. Typische Integrationszeiten können zwischen etwa 0,2 Sekunden und etwa 0,5 Sekunden liegen. Die Integrationszeit kann zur weiteren Optimierung von der Fahrzeuggeschwindigkeit abhängen.

In allgemein bevorzugter Ausführung ist es vorgesehen, dass der Sollwert im Zuge der Ermittlung der Information über den Fahrereingriff zeitlich verzögert wird, insbesondere mittels eines Tiefpassfilters. Diese zeitliche Verzögerung bezieht sich nicht auf den an die Stelleinheit weitergegebenen Sollwert, sondern auf das Signal, das in die Berechnung einer möglichen Fahrereingriffserkennung eingeht. Der Sollwert ist im vorliegenden System regelmäßig die früheste Ursache einer Änderung des Lenkungszustandes, wobei sich der Messwert an der Lenksäule als Auswirkung der Sollwertvorgabe an eine Stelleinheit verändert. Aufgrund der mechanischen Ausgestaltung und Trägheit des Gesamtsystems wird eine Änderung des Sollwertes daher regelmäßig einer Änderung des Messwertes an der Lenksäule vorauseilen, insoweit der Fahrer keinen Eingriff vornimmt. Die zeitliche Verzögerung des Sollwertsignals ermöglicht somit einen verbesserten Vergleich des Sollwerts mit dem Messwert der Lenksäule.

In weiterer bevorzugter Ausführung ist es vorgesehen, dass eine manuelle Betätigung der Lenksäule erkannt wird, sobald aus dem Messwert und dem Sollwert eine entgegengesetzte Betätigungsrichtung der Lenksäule und der Stelleinheit folgt. Im eingriffsfreien Fall wird der Messwert der Lenksäule dem Sollwert regelmäßig nicht streng proportional nachfolgen, jedoch zumindest hinsichtlich des Vorzeichens übereinstimmen, insofern man eine ggf. vorliegende zeitliche Verzögerung durch die Systemträgheit berücksichtigt. Inverse Vorzeichen ermöglichen daher eine besonders zuverlässige Erkennung eines Eingriffs durch den Fahrer, was in der Praxis bedeutet, dass der Fahrer das automatisch in eine Richtung drehende Lenkrad durch Krafteinwirkung zumindest einen kurzen Zeitraum in zu seiner automatisierten Bewegung entgegengesetzter Richtung dreht. Besonders vorteilhaft wird dabei ein Vergleich der Vorzeichen von dem Sollwert und einer Drehwinkelgeschwindigkeit der Lenksäule vorgenommen, wobei je nach Ausgang des Vergleichs in verschiedene Verfahrensschritte zur Ermittlung der Information über das Vorliegen oder Nichtvorliegen einer manuellen Betätigung der Lenksäule verzweigt wird. Durch das Vorsehen der unterschiedlichen Ermittlungsverfahren ist somit zumindest für den Fall des inversen Vorzeichens eine besonders schnelle Eingriffserkennung ermöglicht.

In einer besonders bevorzugten Ausführungsform des erfindungsgemäßen Verfahrens erfolgt die Vorgabe des Sollwertes aus der elektronischen Steuereinheit im Zuge einer rechnergestützten Ansteuerung der Lenkung während eines automatisierten Ein- oder Ausparkvorgangs. Automatische Parkvorgänge, die ggf. durch weitere Erkennungssensoren wie Kameras oder ähnliches unterstützt werden, erfolgen bei verhältnismäßig geringen Fahrzeuggeschwindigkeiten. Gerade in solchen Geschwindigkeitsbereichen ist die erfindungsgemäße Erkennung eines Eingriffs durch den Fahrer besonders sicher ermöglicht. Somit ist die Kombination eines erfindungsgemäßen Verfahrens zur Erkennung eines Fahrereingriffs besonders gut zur Kombination mit einer automatisierten Ein- und Ausparkhilfe geeignet. Grundsätzlich kann das erfindungsgemäße Verfahren jedoch auch bei anderen automatischen Steuervorgängen Verwendung finden, zum Beispiel bei einer automatischen Spurkontrolle oder Seitenabstandskontrolle.

Die Aufgabe der Erfindung wird für eine eingangs genannte Servolenkung zudem mit den kennzeichnenden Merkmalen des Anspruchs 12 gelöst.

Zur Einsparung von Kosten und zur Vereinfachung der Betriebsweise ist vorgesehen, dass kein Sensor zur Messung eines Drehmoments der Lenksäule vorgesehen ist. Eine unmittelbare Messung eines Drehmoments ist besonders aufwendig und kostenintensiv. In besonders einfacher Ausführung kann der Sensor zur Messung des Drehzustands der Lenksäule auch insgesamt der einzige Sensor zur Messung eines Zustands der Servolenkung sein. Hierunter sind keine von der Lenkung unabhängige Sensoren wie etwa Radsensoren zur Erfassung einer Fahrzeuggeschwindigkeit oder zur Steuerung eines Antiblockiersystems zu verstehen.

Weitere Vorteile und Merkmale ergeben sich aus dem nachfolgend beschriebenen Ausführungsbeispiel sowie aus den abhängigen Ansprüchen.

Nachfolgend wird ein bevorzugtes Ausführungsbeispiel der Erfindung beschrieben und anhand der anliegenden Zeichnungen näher erläutert.
- Fig. 1: zeigt eine schematische Darstellung einer erfindungsgemäßen Servolenkung.

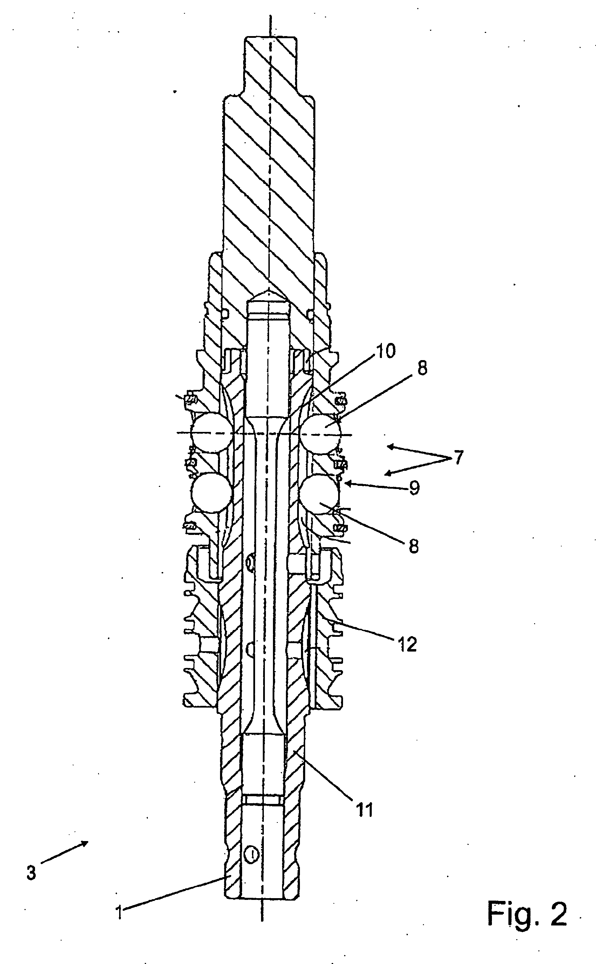

- Fig. 2: zeigt eine Schnittansicht eines Drehschieberventils der Servolenkung aus Fig. 1.
- Fig. 3: zeigt eine schematische Darstellung eines erfindungsgemäßen Steuerungsverfahrens.

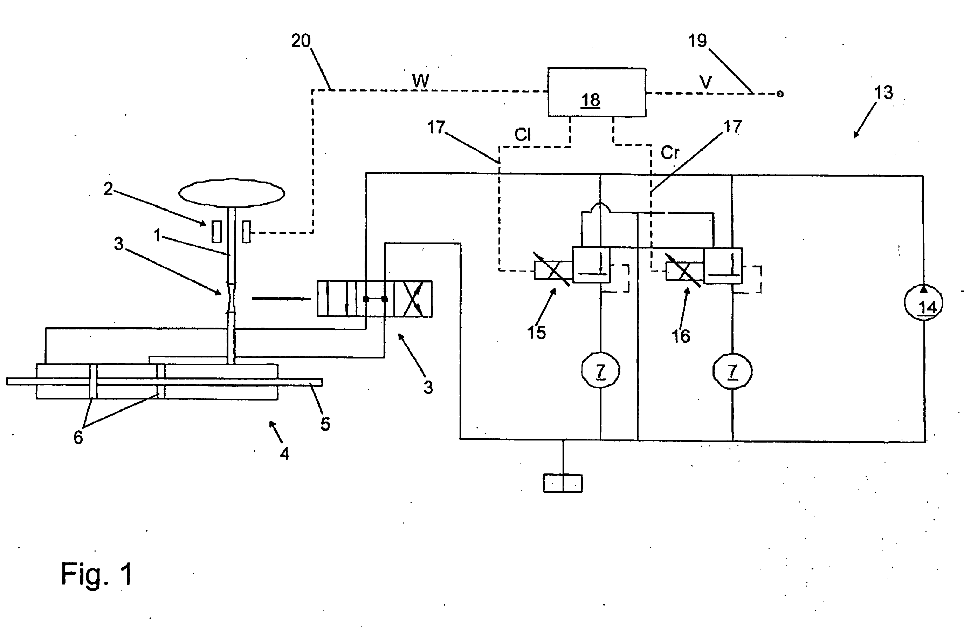

Eine erfindungsgemäße Servolenkung umfasst gemäß Fig. 1 eine von einem Fahrer betätigbare Lenksäule 1, an der ein Sensor 2 zur Messung eines momentanen Drehwinkels der Lenksäule 1 angeordnet ist. Die Lenksäule 1 ist über ein Drehschieberventil 3 mechanisch mit einem Lenkgetriebe 4 verbunden, mittels dessen nicht dargestellte Fahrzeugräder über eine Zahnstange 5 in ihrem Lenkwinkel verstellbar sind. Das Lenkgetriebe 4 umfasst zudem eine als hydraulische Kolben-Zylinder-Einheit ausgebildete Stelleinheit 6 zur Kraftunterstützung bei der Verstellung der Räder.

Die mechanische Verbindung der Lenksäule 1 mit dem Lenkgetriebe 4 erfolgt im Drehschieberventil 3 auf bekannte Weise über eine Torsionsstabfeder, so dass die Räder des Fahrzeugs auch bei völligem Ausfall der Hydraulik durch den Fahrer verstellt werden können. Zugleich ist die vorliegende Servolenkung so ausgebildet, dass eine automatisierte motorische Verstellung der Fahrzeugräder ohne jeden Eingriff des Fahrers ermöglicht ist, wobei der Umfang einer solchen automatisierten Steuerung lediglich von den weiteren elektronischen Steuerungskomponenten abhängt. Die automatisierte Ansteuerbarkeit der Räder wird durch an dem Drehschieberventil vorgesehene Steuermittel 7 ermöglicht. Bei den Steuermitteln 7 handelt es sich um als Kugeln 8 ausgebildete Stellkörper, die in Bohrungen 9 einer Steuerhülse 12 geführt sind und von außen kontrolliert mit einem Hydraulikdruck beaufschlagt werden können. Die bewegbaren Stellkörper 8 drücken auf Kanten von Nuten 10 eines in der Steuerhülse 12 angeordneten Drehschieberteils 11, so dass das Drehschieberteil 11 gegenüber der Steuerhülse 12 kontrolliert motorisch verdrehbar ist. Das Drehschieberteil 11 ist zudem drehfest mit der Lenksäule 1 verbunden, so dass eine Verdrehung des Drehschieberteils 11 in der Hülse 12 und somit eine kontrollierte Freigabe von hydraulischen Leitungen zur Beaufschlagung der Stelleinheit 6 wahlweise automatisiert oder durch den Fahrer oder durch beides gleichzeitig erfolgen kann.

Wie die schematische Darstellung nach Fig. 1 zeigt, erfolgt die Beaufschlagung der Steuermittel 7 durch Zweige eines Hydraulikkreises 13 mit einer zentralen Hydraulikpumpe 14, durch den auch die Stelleinheit 6 versorgt wird. Vorliegend sind mehrere Steuermittel 7 vorgesehen, wobei die einen zur Verdrehung des Drehschiebers 11 in die eine Richtung und die anderen zur Verdrehung des Drehschiebers 11 in die entgegengesetzte Richtung ausgebildet sind. Dementsprechend sind in den Hydraulikzweigen, durch die die Steuermittel 7 versorgt werden, ein erstes Proportionalventil 15 und ein zweites Proportionalventil 16 vorgesehen. Die Proportionalventile 15, 16 sind jeweils über elektrische Signale 17 ansteuerbar, die von einer elektronischen Steuereinheit 18 bereitgestellt werden. Die Steuereinheit 18 ist zudem über eine Leitung 19 mit einem zentralen Fahrzeug-Datenbus, z. B. einem CAN-Bus verbunden und kann über eine Leitung 20 die Daten des Messwertsensors 2 an der Lenksäule 1 auslesen. In der Zeichnung Fig. 1 sind die elektrischen Leitungen gestrichelt dargestellt und hydraulische Leitungen sind durchgezogen dargestellt. Über den Fahrzeug-Datenbus 19 kann die elektronische Steuerung der Servolenkung relevante Fahrzeugdaten wie z. B. die momentane Geschwindigkeit V des Fahrzeugs, erhalten.

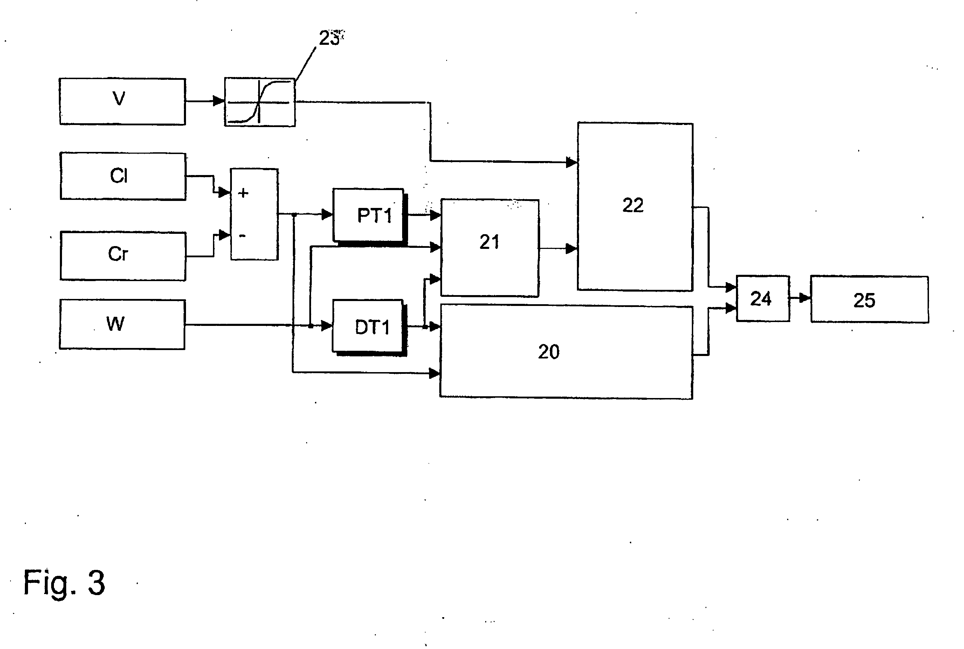

Die Erkennung eines Eingriffs des Fahrers während eines automatischen Ein- und Ausparkvorgangs wird nun anhand des schematischen Ablaufdiagramms nach Fig. 3 erläutert:
Die Steuereinheit erhält kontinuierlich Eingangsdaten, umfassend die momentane Fahrzeuggeschwindigkeit V, den Steuerungsstrom des rechten Proportionalventils Cr, den Steuerungsstrom des linken Proportionalventils Cl sowie den momentan anliegenden Stellwinkel der Lenksäule W.
   Der Sollwert für eine Kraftbeaufschlagung der Stelleinheit 6 bzw. eine entsprechende Verdrehung des Drehschiebers 11 ergibt sich aus der Differenz der Ströme Cr, Cl. Das gebildete Differenzsignal stellt einen Sollwert für die Größe der Lenkungsverstellung dar, der regelmäßig der gemessenen Reaktion an der Lenksäule vorauseilt. Daher wird der Sollwert einer Tiefpassfilterung PT1 unterzogen. Der kontinuierlich oder mit hoher Wiederholrate gemessene Lenkwinkel W wird einer zeitlichen Ableitung DT1 unterzogen, um die Lenkwinkelgeschwindigkeit Ow zu erhalten.

Gemäß dem Ablaufdiagramm nach Fig. 3 werden nunmehr zwei Fälle unterschieden. In dem einen Fall 20 liegt ein unterschiedliches Vorzeichen der Drehrichtung der Lenksäule und der Steuermittel 7 vor. Hieraus kann mit hoher Sicherheit auf einen manuellen Eingriff des Fahrers geschlossen werden, der in diesem Fall das Lenkrad in die Gegenrichtung zu der Richtung dreht, die es durch die automatisierte Steuerung erfährt.

In dem anderen Fall der gleichen Drehrichtung des Fahrereingriffs und der automatisierten Steuerung bzw. dem Fall gleicher Vorzeichen erfolgt zunächst ein Normierungsschritt 21. Hierbei wird das Signal der Lenkwinkelgeschwindigkeit Ow über einen Normierungsfaktor an das Signal der zeitlich verzögerten Stromdifferenz angeglichen und nachfolgend subtrahiert. Dieses resultierende Signal der Abweichung sollte im Idealfall verschwinden. In der Realität wird dieses Signal bedingt durch Systemträgheiten, Überschwinger, äußere Einflussgrößen und weitere Effekte regelmäßig eine gewisse Größe aufweisen, auch wenn kein Fahrereingriff vorliegt. Zudem werden solche Fluktuationen regelmäßig mit der Fahrzeuggeschwindigkeit ansteigen, da hiermit die Störfaktoren zunehmen. In einem Vergleichsschritt 22 wird das Abweichungssignal daher mit einem vordefinierten Schwellwert verglichen. Zudem wird die Fahrzeuggeschwindigkeit V ausgelesen und mit Hilfe aus einer festgelegten Tabelle 23 ermittelt, ob diese oberhalb eines vordefinierten Wertes, zum Beispiel 10 km/h, liegt. Falls dies nicht zutrifft, so wird aus der momentanen Überschreitung des Schwellwerts auf einen Eingriff des Fahrers erkannt.

Liegt die Geschwindigkeit V oberhalb des fraglichen Wertes, so wird eine Wartezeit von typisch 0,3 Sekunden gestartet, nach deren Ablauf ein erneuter Vergleich von Abweichungssignal und Schwellwert stattfindet. Nur falls der Schwellwert weiterhin überschritten ist, wird auch im Fall der höheren Fahrzeuggeschwindigkeit auf einen Fahrereingriff erkannt.

Insbesondere kann es sich bei der Tabelle 23 um eine Ausgestaltung handeln, die je nach Fahrzeuggeschwindigkeit V eine unterschiedliche Wartezeit zuweist. Selbstverständlich ist im Interesse einer Betriebssicherheit die maximale Wartezeit begrenzt, um dem Fahrer immer eine ausreichend schnelle Eingriffsmöglichkeit zu geben.

Die Alternativen der Eingriffserkennung über unterschiedliche Vorzeichen oder Überschreiten eines Schwellwertes bei gleichen Vorzeichen wird vorliegend durch eine Oder-Verknüpfung 24 dargestellt, wobei es sich je nach Steuerungsart und Software auch um ein anderes Ablaufdiagramm handeln kann. Ist eine der vorgenannten Bedingungen erfüllt, so wird ein Signal 25 generiert, bei dessen Vorliegen ein automatischer Ein- und Ausparkvorgang unterbrochen wird.

Versuche haben gezeigt, dass das vorliegende Verfahren zur Erkennung eines manuellen Eingriffs besonders gut bei relativ geringen Fahrzeuggeschwindigkeiten anwendbar ist, wie sie insbesondere bei automatisierten Ein- und Ausparkvorgängen vorkommen. Solche Fahrzeuggeschwindigkeiten liegen typisch unterhalb von 30 km/h, insbesondere bei maximal 15 km/h.

## Patentansprüche

1. Verfahren zur Steuerung einer kraftunterstützten Lenkung eines Kraftfahrzeugs, umfassend die Schritte
- Vorgabe eines Sollwertes (Cl, Cr) aus einer elektronischen Steuereinheit (18) zur Ansteuerung einer Stelleinheit (6) zur Einstellung eines Lenkwinkels eines Fahrzeugrades,
- Auslesen eines Messwertes (W, Ow) eines Drehzustands einer von einem Fahrer manuell betätigbaren Lenksäule (1), wobei der Messwert des Drehzustands ein momentaner Drehwinkel (W) der Lenksäule (1) ist, weiter **gekenntzeichnet durch** folgeende Schritte:
- wiederholte oder kontinuierliche Messung des momentanen Drehwinkels (W) der Lenksäule und Bestimmung einer Lenksäulenwinkelgeschwindigkeit (Ow) aus einer zeitlichen Änderung des Drehwinkels (W),
- In Abhängigkeit von dem Sollwert (Cl, Cr) der Stelleinheit (6) und von dem Mesawert (W, Ow) des Drehzustands der Lenksäule (1): Ermitteln einer Abweichung des Sollwerts (Cl, Cr) der Stelleinheit von der Drehwinkelgeschwindigkeit (Ow), insbesondere nach Normierung (21) durch einen vorgebbaren Faktor,
Ermittlung einer Information (25) über das Vorliegen oder Nichtvorliegen einer manuellen Betätigung der Lenksäule (1) durch den Fahrer, wobei die manuelle Betätigung der Lenksäule (1) durch den Fahrer dann erkannt wird, wenn die Abweichung einen Schwellwert (23) übersteigt.

2. Verfahren nach Anspruch 1, **dadurch gekennzeichnet, dass** der Sollwert (Cl, Cr) der Stelleinheit (6) ein elektrisches Signal zur Beaufschlagung eines elektrisch ansteuerbaren hydraulischen Proportionalventils (15, 16) ist.

3. Verfahren nach Anspruch 2, **dadurch gekennzeichnet, dass** der Sollwert eine Differenz zweier elektrischer Signale (Cl, Cr) zur Beaufschlagung zweier elektrisch ansteuerbarer hydraulischer Proportionalventile (15, 16) ist, wobei die beiden Proportionalventile (15, 16) zur Ansteuerung entgegengesetzter Lenkungskräfte verschaltet sind.

4. Verfahren nach Anspruch 3, **dadurch gekennzeichnet, dass** der Schwellwert (23) von einer Geschwindigkeit (V) des Kraftfahrzeuges abhängt.

5. Verfahren nach einem der Ansprüche 3 oder 4, **umfassend** den Schritt
Starten einer Wartezeit in Abhängigkeit eines Überschreitens eines Schwellwertes (23) durch die Abweichung und/oder im Falle einer Überschreitung eines Schwellwertes (23) durch eine Geschwindigkeit (V) des Fahrzeugs, wobei auf die manuelle Betätigung der Lenksäule (1) nur dann erkannt wird, wenn die Abweichung einen Schwellwert (23) nach Ablauf der Wartezeit übersteigt.

6. Verfahren nach Anspruch 5, **dadurch gekennzeichnet, dass** die Dauer der Wartezeit von einer Geschwindigkeit (V) des Fahrzeugs abhängt, wobei insbesondere bei kleinen Geschwindigkeiten keine Wartezeit vorgesehen sein kann.

7. Verfahren nach einem der vorhergehenden Ansprüche, **umfassend** den Schritt
- Integration einer insbesondere normierten Differenz des Sollwertes der Stelleinheit und des Messwertes des Drehzustandes der Lenksäule über die Zeit, wobei das Integral über einen gegebenen Zeitraum ein Maß für das Vorliegen oder Nichtvorliegen einer manuellen Betätigung der Lenksäule durch den Fahrer ist.

8. Verfahren nach einem der vorhergehenden Ansprüche, umfassend den Schritt
- zeitliche Verzögerung des Sollwerts (Cl, Cr), insbesondere mittels eines Tiefpassfilters (PT1).

9. verfahren nach einem der vorhergehenden Ansprüche, **dadurch gekenntzeichnet, dass** eine manuelle Betätigung der Lenksäule (1) erkannt wird, sobald aus dem Messwert (W) und dem Sollwert (Cl, Cr) eine entgegengesetzte Betätigungsrichtung der Lenksäule (1) und der Stelleinheit (6) erkannt wird.

10. Verfahren nach Anspruch 9, **umfassend** den Schritt
- Vergleich der Vorzeichen des Sollwerts (Cl, Cr) und einer Drehwinkelgeschwindigkeit (Ow) der Lenksäule und je nach Ausgang des Vergleichs Verzweigung in verschiedene Verfahrensschritte zur Ermittlung der Information über das Vorliegen oder Nichtvorliegen einer manuellen Betätigung der Lenksäule (1).

11. Verfahren nach einem der vorhergehenden Ansprüche, **dadurch gekennzeichnet, dass** die Vorgabe des Sollwertes (Cl, Cr) aus der elektronischen Steuereinheit (18) im Zuge einer rechnergestützten Ansteuerung der Lenkung während eines automatisierten Ein- oder Ausparkvorgangs erfolgt.

12. Servolenkung für ein Kraftfahrzeug, umfassend
eine von einem Fahrer betätigbare Lenksäule (1) mit einem Sensor (2) zur Messung eines Drehzustands der Lenksäule, wobei die Lenksäule (1) mechanisch über ein Lenkgetriebe (4) mit einem Rad des Kraftfahrzeugs verbunden ist,
eine Stelleinheit (6) zur motorischen Einstellung eines Lenkwinkels des Rads, wobei der Stelleinheit (6) ein Sollwert (Cl, Cr) aus einer elektronischen Steuereinheit (18) zur Einstellung des Lenkwinkels vorgebbar ist,
**dadurch gekennzeichnet dass,**
die elektronische Steuereinheit (18) ein Steuerprogramm aufweist, mittels dessen eine manuelle Betätigung der Lenksäule durch einen Fahrer erkennbar ist, wobei die Erkennung nach einem Verfahren nach einem der Ansprüche 1 bis 11 erfolgt.

13. Servolenkung nach einem der vorhergehenden Ansprüche, **dadurch gekennzeichnet, dass** kein Sensor zur Messung eines Drehmoments der Lenksäule (1) vorgesehen ist.

14. Servolenkung nach einem der vorhergehenden Ansprüche, **dadurch gekennzeichnet, dass** der Sensor (2) zur Messung des Drehzustands der Lenksäule der einzige Sensor zur Messung eines Zustands der Servolenkung ist.

## Claims

1. Method of controlling a power-assisted steering system of a motor vehicle, comprising the following steps:
- presetting of a desired value (Cl, Cr) from an electronic control unit (18), to control a positioning unit (6) for setting a steering angle of a wheel of the vehicle,
- read-out of a measured value (W, Ow) of a rotated state of a steering column (1) which can be manually actuated by the driver, the measured value of the rotated state being an instantaneous angle of rotation (W) of the steering column (1), also
**characterised by** the following steps:
- repeated or continuous measurement of the instantaneous angle of rotation (W) of the steering column and determining of an angular speed (Ow) of the steering column from a change in the angle of rotation (W) over time,
- as a function of the desired value (Cl, Cr) for the positioning unit (6) and as a function of the measured value (W, Ow) of the rotated state of the steering column (1): determining of a difference between the desired value (Cl, Cr) for the positioning unit and the angular speed of rotation (Ow), in particular after normalisation (21) by a presettable factor,
- determining of information (25) on whether or not the steering column (1) is being manually actuated by the driver, manual actuation of the steering column (1) by the driver being detected when the difference exceeds a threshold value (23).

2. Method according to claim 1, **characterised in that** the desired value (Cl, Cr) for the positioning unit (6) is an electrical signal for application to an electrically actuatable hydraulic proportional valve (15, 16).

3. Method according to claim 2, **characterised in that** the desired value is a difference between two electrical signals (Cl, Cr) for application to two electrically actuatable hydraulic proportional valves (15, 16), the two proportional valves (15, 16) being connected to control steering forces in opposite directions.

4. Method according to claim 3, **characterised in that** the threshold value (23) depends on a speed (V) of the motor vehicle.

5. Method according to either of claims 3 and 4, comprising the following step
starting of a waiting time, as a function of an overrun of a threshold value (23) by the difference and/or in the event of an overrun of a threshold value (23) by the speed (V) of the vehicle, the manual actuation of the steering column (1) being detected only when the difference exceeds a threshold value (23) on expiry of the waiting time.

6. Method according to claim 5, **characterised in that** the length of the waiting time depends on a speed (V) of the vehicle, it being possible for provision to be made for no waiting time, particularly at low speeds.

7. Method according to one of the preceding claims, comprising the following step
- integration over time of a difference, which is in particular normalised, between the desired value for the positioning unit and the measured value of the rotated state of the steering column, the integral over a given period of time being an indication of whether or not the steering column is being manually actuated by the driver.

8. Method according to one of the preceding claims, comprising the following step
- delaying of the desired value (Cl, Cr) in time, in particular by means of a low-pass filter (PT1).

9. Method according to one of the preceding claims, **characterised in that** manual actuation of the steering column (1) is detected as soon as an opposite direction of actuation of the steering column (1) and the positioning unit (6) is detected from the measured value (W) and the desired value (Cl, Cr).

10. Method according to claim 9, comprising the following step
- comparison of the sign of the desired value (Cl, Cr) and of an angular speed of rotation (Ow) of the steering column and, depending on the result of the comparison, branching to different method steps to allow information on whether or not the steering column (1) is being manually actuated to be determined.

11. Method according to one of the preceding claims, **characterised in that** the presetting of the desired value (Cl, Cr) from the electronic control unit (18) takes place in the course of computer-assisted control of the steering during an automated process of taking up or leaving a parked position.

12. Servo-steering system for a motor vehicle, comprising a steering column (1) able to be actuated by a driver, having a sensor (2) for measuring a rotated state of the steering column, the steering column (1) being mechanically connected to a wheel of the motor vehicle via a steering gearbox (4),
a positioning unit (6) for the motorised setting of a steering angle of the wheel, the positioning unit (6) being able to have a desired value (Cl, Cr) for setting the steering angle set for it from an electronic control unit (18),
**characterised in that**
the electronic control unit (18) has a control program by means of which manual actuation of the steering column by a driver can be detected, the detection being performed by a method according to one of claims 1 to 11.

13. Servo-steering system according to one of the preceding claims, **characterised in that** a sensor is not provided for measuring a torque on the steering column (1).

14. Servo-steering system according to one of the preceding claims, **characterised in that** the sensor (2) for measuring the rotated state of the steering column is the only sensor for measuring a state of the servo-steering system.

## Revendications

1. Procédé de commande d'une direction à force d'assistance ou direction assistée d'un véhicule automobile, comprenant les étapes consistant à
- allouer une valeur de consigne (Cl, Cr) provenant d'une unité de commande électronique (18) pour la commande d'une unité de réglage (6) destinée à régler un angle de braquage d'une roue de véhicule,
- lire une valeur de mesure (W, Ow) d'un état de rotation d'une colonne de direction (1) pouvant être actionnée manuellement par un conducteur, la valeur de mesure de l'état de rotation étant un angle de rotation instantané (W) de la colonne de direction (1),
par ailleurs
**caractérisé par** les étapes suivantes :
- mesure répétée ou continue de l'angle de rotation instantané (W) de la colonne de direction, et détermination d'une vitesse angulaire de colonne de direction (Ow) à partir d'une variation dans le temps de l'angle de rotation (W),
- en fonction de la valeur de consigne (Cl, Cr) de l'unité de réglage (6) et de la valeur de mesure (W, Ow) de l'état de rotation de la colonne de direction (1) :
détermination d'un écart de la valeur de consigne (Cl, Cr) de l'unité de réglage par rapport à la vitesse angulaire de rotation (Ow), notamment après avoir été normée (21) par un facteur pouvant être prescrit,
- détermination d'une information (25) concernant la présence ou non présence d'un actionnement manuel de la colonne de direction (1) par le conducteur, l'actionnement manuel de la colonne de direction (1) par le conducteur étant reconnu lorsque l'écart dépasse une valeur de seuil (23).

2. Procédé selon la revendication 1, **caractérisé en ce que** la valeur de consigne (Cl, Cr) de l'unité de réglage (6) est un signal électrique destiné à alimenter une vanne proportionnelle hydraulique (15, 16) pouvant être commandée électriquement.

3. Procédé selon la revendication 2, **caractérisé en ce que** la valeur de consigne est une différence de deux signaux électriques (Cl, Cr) pour alimenter deux vannes proportionnelles hydrauliques (15, 16) pouvant être commandées électriquement, les deux vannes proportionnelles (15, 16) étant montées en circuit pour la commande de forces de direction opposées.

4. Procédé selon la revendication 3, **caractérisé en ce que** la valeur de seuil (23) est fonction d'une vitesse (V) du véhicule automobile.

5. Procédé selon l'une des revendications 3 ou 4, comprenant l'étape consistant à
- démarrer un temps d'attente en fonction du dépassement d'une valeur de seuil (23) par l'écart et/ou dans le cas d'un dépassement d'une valeur de seuil (23) par une vitesse (V) du véhicule, l'actionnement manuel de la colonne de direction (1) n'étant reconnu que lorsque l'écart dépasse une valeur de seuil (23) après écoulement du temps d'attente.

6. Procédé selon la revendication 5, **caractérisé en ce que** la durée du temps d'attente dépend d'une vitesse (V) du véhicule, avec notamment la possibilité de ne prévoir aucun temps d'attente pour les faibles vitesses.

7. Procédé selon l'une des revendications précédentes, comprenant l'étape consistant à
- intégrer par rapport au temps une différence, notamment normée, de la valeur de consigne de l'unité de réglage et de la valeur de mesure de l'état de rotation de la colonne de direction, l'intégrale sur un temps donné étant une mesure pour la présence ou la non présence d'un actionnement manuel de la colonne de direction par le conducteur.

8. Procédé selon l'une des revendications précédentes, comprenant l'étape consistant à
- temporiser la valeur de consigne (Cl, Cr), notamment au moyen d'un filtre passe-bas (PT1).

9. Procédé selon l'une des revendications précédentes, **caractérisé en ce qu'**un actionnement manuel de la colonne de direction (1) est reconnu dès que l'on détecte, à partir de la valeur de mesure (W) et de la valeur de consigne (Cl, Cr), une direction d'actionnement opposée de la colonne de direction (1) et de l'unité de réglage (6).

10. Procédé selon la revendication 9, comprenant l'étape consistant à
- comparer les signes de la valeur de consigne (Cl, Cr) et d'une vitesse angulaire de rotation (Ow) de la colonne de direction, et, suivant le résultat de la comparaison, bifurquer dans des étapes de procédé différentes pour la détermination de l'information concernant la présence ou la non présence d'un actionnement manuel de la colonne de direction (1).

11. Procédé selon l'une des revendications précédentes, **caractérisé en ce que** la valeur de consigne (Cl, Cr) en provenance de l'unité de commande électronique (18) est allouée dans le cadre d'une commande de la direction, pilotée par calculateur, pendant une opération automatisée de mise en stationnement ou consistant à quitter un stationnement.

12. Direction assistée pour un véhicule automobile, comprenant
une colonne de direction (1) pouvant être actionnée par un conducteur et comportant un capteur (2) pour mesurer un état de rotation de la colonne de direction, la colonne de direction (1) étant reliée mécaniquement, par l'intermédiaire d'une transmission de direction (4), à une roue du véhicule automobile,
une unité de réglage (6) pour le réglage motorisé d'un angle de braquage de la roue, une valeur de consigne (Cl, Cr) en provenance d'une unité de commande électronique (18) pouvant être allouée à l'unité de réglage (6), pour régler l'angle de braquage, **caractérisée en ce que**
l'unité de commande électronique (18) présente un programme de commande au moyen duquel il est possible de reconnaître un actionnement manuel de la colonne de direction par un conducteur, la reconnaissance s'effectuant d'après un procédé selon l'une des revendications 1 à 11.

13. Direction assistée selon l'une des revendications précédentes, **caractérisée en ce qu'**il n'est prévu aucun capteur pour mesurer un couple sur la colonne de direction (1).

14. Direction assistée selon l'une des revendications précédentes, **caractérisée en ce que** le capteur (2) pour mesurer l'état de rotation de la colonne de direction, est le seul capteur pour la mesure d'un état de la direction assistée.
